# EUROPÄISCHE PATENTSCHRIFT

(11) **EP 3 017 371 B1**
(45) Veröffentlichungstag und Bekanntmachung des Hinweises auf die Patenterteilung: **14.10.2020**
(21) Anmeldenummer: 14736730.4
(22) Anmeldetag: 02.07.2014
(51) Int. Cl.: G06F 11/07, G05B 19/042, G06F 11/20

(54) **VERFAHREN ZUR FEHLERUEBERWACHUNG, STEUER- UND DATENUEBERTRAGUNGSANLAGE UND STEUEREINRICHTUNG**
METHOD FOR ERROR MONITORING, CONTROL AND DATA TRANSMISSION INSTALLATION AND CONTROL DEVICE
PROCÉDÉ DE SURVEILLANCE D'ERREUR, INSTALLATION DE COMMANDE ET DE TRANSMISSION DE DONNÉES ET DISPOSITIF DE COMMANDE

(30) Priorität: 02.07.2013 DE 102013106954
(43) Veröffentlichungstag der Anmeldung: 11.05.2016
(73) Patentinhaber: Phoenix Contact GmbH & Co. KG, 32825 Blomberg (DE)
(72) Erfinder: UHDE, Thorsten, 31785 Hameln (DE); SETHURAMAN, Vinoth, 31785 Hameln (DE); HEUTGER, Henning, 31812 Bad Pyrmont (DE)
(74) Vertreter: Blumbach · Zinngrebe Patentanwälte PartG mbB
(86) Internationale Anmeldenummer: PCT/EP2014/064060
(87) Internationale Veröffentlichungsnummer: WO 2015/000957

(56) Entgegenhaltungen:
- EP-A2- 0 111 871
- WO-A1-2013/053978
- DE-A1-102006 047 026
- US-A- 5 434 994

## Beschreibung

Die Erfindung betrifft allgemein die Automatisierungstechnik, und insbesondere die Fehlerüberwachung in einer Steuer- und Datenübertragungsanlage mit wenigstens zwei redundanten Steuereinrichtungen, welche über ein Kommunikationsnetzwerk mit wenigstens einer als Ein- und/oder Ausgabegerät ausgebildeten Prozesseinrichtung verbunden sind, wobei zwischen den Steuereinrichtungen eine Kommunikationsverbindung besteht.

In der Automatisierungstechnik werden bei Applikationen, die hochverfügbar ausgelegt sind, wie zum Beispiel eine Tunnelüberwachung, sogenannte Redundanzsteuerungen verwendet. Dabei steuert eine Steuereinrichtung, üblicherweise auch als Steuerung oder Controller bezeichnet, den Prozess und die andere Steuereinrichtung läuft im Standby-Betrieb, um beim Eintreten bestimmter Ereignisse die Prozesskontrolle übernehmen zu können. Der Programmablauf wird dabei zwischen den Steuereinrichtungen über eine Synchronisationsverbindung abgeglichen, damit der Prozess nach einer Umschaltung in gleicher Weise weiter gesteuert werden kann. Neben dieser Synchronisation des Anwenderprogramms werden auch weitere Informationen zwischen den Steuereinrichtungen ausgetauscht, um den konsistenten Betrieb sicher zu stellen. Jede der Steuereinrichtungen muss über den Zustand und Funktion der anderen informiert sein, um den eigenen Ablauf darauf abzustimmen.

Aus DE 100 30 329 C1 ist beispielsweise ein redundantes Steuerungssystem mit Steuerrechnern und einer Peripherieeinheit bekannt, bei welchem die Steuerrechner zyklisch wechselnde Lebenszeichen ausgeben, wobei die Peripherieeinheit bei Ausbleiben eines Lebenszeichenwechsels auf den jeweils anderen Steuerrechner umschaltet.

In DE 10 2006 047 026 B4 wird ferner eine Steuer- und Datenübertragungsanlage mit wenigstens zwei Steuereinrichtungen und wenigstens einer Slaveeinrichtung, welche über ein Kommunikationsnetzwerk miteinander verbunden sind, beschrieben, wobei die Slaveeinrichtung mehrere adressierbare Ausgangsschnittstellen zum Empfang von Ausgangs- und Statusdaten enthält und jede Steuereinrichtung eine Einrichtung zum Erzeugen und Übertragen von Status- und Ausgangsdaten zu einer separaten Ausgangsschnittstelle der Slaveeinrichtung aufweist, und wobei die Slaveeinrichtung eine Auswerteeinrichtung aufweist, die unter Ansprechen auf die von den Steuereinrichtungen empfangenen Statussignale die Weiterleitung von empfangenen Ausgangsdaten zur weiteren Verwendung steuert.

In EP 0 111 871 A2 D1 wird ein Steuersystem zur Prozesssteuerung beschrieben, bei dem eine Mehrzahl dezentraler zur Prozesssteuerung eingesetzte Steuereinheiten über einen Bus mit zwei redundanten Sammeleinrichtungen verbunden sind, welche wiederum über einen Bus mit einer Steuerkonsole verbunden sind, wobei die Sammeleinrichtungen Prozessdaten von den dezentralen Steuereinheiten sammeln, diese speichern und sie an die dezentralen Steuereinheiten oder an die Steuerkonsole weiterleiten. Die Sammeleinrichtungen sind miteinander verbunden, wobei jede der Sammeleinrichtungen Fehlerdetektoren zur Erkennung eigener Fehler umfasst, und wobei detektierte Fehler der jeweils anderen Sammeleinrichtung signalisiert werden. Mit Hilfe eines Schalters wird eine der Sammeleinrichtungen als aktive Sammeleinrichtung und die andere als Backup-Sammeleinrichtung festgelegt, wobei bei Erkennen eines Fehlers die Backup-Sammeleinrichtung die Funktion der aktiven Sammeleinrichtung übernehmen kann.

Aus US 5,434,994 A ist ein verteiltes Datenmanagement-System mit mehreren Replikat-Servern bekannt, bei welchem ein optimistisches Replikations-Schema eingesetzt wird, d.h. bei dem ein gleichzeitiges Ändern auf mehreren Replikat-Servern zugelassen wird. Zur Beseitigung auftretender Konflikte sind Mittel zum Erkennen von Ereignissen, die ein Update der replizierten Daten erforderlich machen, sowie Mittel zum Koordinieren des Daten-Updates vorgesehen. Alle Operationen, die eine Änderung der Daten in einem Schreib/Lese-Replikat erzeugen, werden in einer Log-Datei gespeichert, wobei diese Log-Dateien regelmäßig zu anderen Servern der gleichen FSG (Fileset Storage Group) übertragen werden, um die Änderungen auch dort zu übernehmen, um die Datenkonsistenz aufrecht zu erhalten, wobei auf diese Weise auch nach Auftreten eines Netzwerk- oder Server-Fehlers die Datenkonsistenz wieder hergestellt werden kann.

In WO 2013/053978 A1 wir ein verfahren, ein System und eine Vorrichtung zum Steuern einer Arbeitsmaschine beschrieben, wobei wenigstens ein Element der Arbeitsmaschine auf Fehler überwacht wird, und wobei bei Erkennen eines Fehlers eine Alarmmeldung aktiviert wird.

Ein Redundanzsteuerungssystem umfasst im allgemeinen zwei Steuereinrichtungen, die untereinander synchronisiert sind, sowie unterlagerte Eingabe-/ Ausgabe-Stationen, die über ein entsprechendes Kommunikationsnetzwerk an beide Steuerungen angebunden sind. Typischerweise übernimmt jeweils eine der beiden Steuereinrichtungen die Rolle der Primärsteuerung, während die jeweils andere die Rolle einer Reservesteuerung übernimmt. Bei Auftreten eines Fehlers in der Primärsteuerung wechseln die Steuereinrichtungen ihre Rollen, d.h. es wird auf die Reservesteuerung umgeschaltet, die dann zur Primärsteuerung wird.

Zur Fehlerüberwachung sind Steuereinrichtungen häufig mit LEDs oder wenige Zeichen umfassenden Anzeigen ausgestattet, mit welchen der aktuelle Betriebszustand bzw. ein Fehlerzustand der jeweiligen Steuereinrichtung signalisiert werden kann.

Der Erfindung liegt die Aufgabe zugrunde, einen Weg aufzuzeigen, wie die Fehlerüberwachung in einer Steuer- und Datenübertragungsanlage zur redundanten Prozessteuerung vereinfacht und/oder verbessert werden kann.

Ein Kerngedanke der Erfindung besteht darin, Fehlerinformationen zwischen redundanten Steuereinrichtungen auszutauschen, so dass insbesondere bei entfernt voneinander angeordneten Steuereinrichtungen auf beiden Steuereinrichtungen die Fehlerinformationen sowohl der jeweils lokalen als auch der entfernten Steuereinrichtung verfügbar sind, und somit zur Diagnose des gesamten Redundanzsystems jeweils lokal die Fehlerhistorie beider Steuereinrichtungen zur Verfügung steht.

Das oben genannte technische Problem wird zum einen durch die Merkmale des Anspruchs 1 gelöst.

Danach ist ein Verfahren zur Fehlerüberwachung in einer zur redundanten Prozesssteuerung ausgebildeten Steuer- und Datenübertragungsanlage mit wenigstens einer ersten Steuereinrichtung und einer zur ersten redundanten und entfernt zur ersten angeordneten, zweiten Steuereinrichtung vorgesehen, wobei die Steuereinrichtungen über ein Kommunikationsnetzwerk mit wenigstens einer als Ein- und/oder Ausgabegerät ausgebildeten Prozesseinrichtung verbunden sind, und wobei zwischen der ersten und zweiten Steuereinrichtung eine Kommunikationsverbindung besteht.

Angemerkt sei an dieser Stelle, dass es sich bei der Steuer- und Datenübertragungsanlage um eine Automatisierungsanlage und bei der Prozesseinrichtung um ein Feldgerät handeln kann. Zwischen der ersten und zweiten Steuereinrichtung besteht eine Kommunikationsverbindung, wobei diese über das Kommunikationsnetzwerk oder über eine separate Punkt-zu-Punkt-Verbindung aufgebaut werden kann. Es können auch beide Kommunikationsverbindungen redundant eingesetzt werden.

Über die Kommunikationsverbindung tauschen die erste und zweite Steuereinrichtung insbesondere Daten zur Synchronisierung der auf den Steuereinrichtungen jeweils ablaufenden Steuerprogramme aus, sowie Statusdaten, welche zum Aushandeln des Betriebszustandes der jeweiligen Steuereinrichtung dienen, wobei jeweils eine der ersten und zweiten Steuereinrichtung den Betriebszustand einer Primärsteuerung und die jeweils andere Steuereinrichtung den Betriebszustand einer Reservesteuerung aufweist. Vorteilhaft handeln die Steuereinrichtungen ihren jeweiligen Betriebszustand über die zwischen ihnen bestehende Kommunikationsverbindung automatisch aus.

Die zweite Steuereinrichtung ist entfernt zur ersten Steuereinrichtung angeordnet. Es sei angemerkt, dass unter einer entfernten Anordnung eine räumliche Trennung der Steuereinrichtungen zu verstehen ist, das heißt, dass die redundanten Steuereinrichtungen nicht in einem gemeinsamen Gehäuse angeordnet sind und beispielsweise nicht über einen fest zur Installation gehörenden Rückwandbus gekoppelt sind, sondern als separate Einrichtungen angeordnet sind. Als entfernt zueinander angeordnet sind somit auch eine erste und zweite Steuereinrichtung zu verstehen, welche als separate Einrichtungen direkt nebeneinander angeordnet sind. Die Kommunikationsverbindung zwischen der ersten und zweiten Steuereinrichtung kann aber auch derart ausgebildet sein, dass die erste und zweite Steuereinrichtung über große Entfernungen miteinander kommunizieren können und somit die Steuereinrichtungen weit voneinander entfernt angeordnet sein können, beispielsweise mehr als 10, mehr als 100 oder mehr als 1000 Meter, oder sogar bis zu 80 km.

Es sei angemerkt, dass beide Steuereinrichtungen Ausgangsdaten an die Prozesseinrichtung zusammen mit Statusdaten übertragen und die Prozesseinrichtung in Abhängigkeit der empfangenen Statusdaten die Weiterleitung von empfangenen Ausgangsdaten zur weiteren Verwendung steuert. Alternativ ist auch denkbar, dass die Steuereinrichtungen nur im Betriebszustand einer Primärsteuerung die wenigstens eine Prozesseinrichtung ansteuern, wobei zu diesem Zweck beispielsweise nur die Steuereinrichtung im Betriebszustand einer Primärsteuerung Ausgangsdaten an die Prozesseinrichtung überträgt.

Das Verfahren sieht vor, dass durch die erste Steuereinrichtung ein Fehler erkannt wird, wobei das Erkennen eines Fehlers vorzugsweise durch das Verarbeiten einer Fehlermeldung erfolgt, die von einem auf der Steuereinrichtung ablaufenden Programm erzeugt wird. Fehlermeldungen können dabei beispielsweise von dem auf der Steuereinrichtung ablaufenden Steuerprogramm zur Prozesssteuerung, d.h. zur Ansteuerung der als Ein- und/oder Ausgabegerät ausgebildeten Prozesseinrichtungen, erzeugt werden, oder aber auch von anderen Programmen wie beispielsweise einem Betriebssystem oder einem Hintergrundprogramm. Fehlermeldungen können beispielsweise einen Programmfehler wie zum Beispiel einen Laufzeitfehler, einen Fehler beim Ausführen eines Programmbefehls oder einen Fehler einer Kommunikationsverbindung betreffen. Ein Fehler beim Ausführen eines Programmbefehls kann beispielsweise auf Basis eines Rückgabewertes einer Programmfunktion erkannt werden. Eine Fehlermeldung kann aber auch von einer Prozesseinrichtung zu der jeweiligen Steuereinrichtung übertragen werden und einen Fehler im Prozessablauf oder in der Prozesseinrichtung betreffen.

Ferner sieht das Verfahren vor, dass in der ersten Steuereinrichtung Fehlerinformationen zu dem erkannten Fehler gespeichert werden, wobei die Fehlerinformationen vorzugsweise Informationen zur Fehlerart, insbesondere in Form eines Fehlercodes, Informationen zum Fehlerzeitpunkt und/oder Informationen zum Betriebszustand der ersten Steuereinrichtung umfassen. Zu diesem Zweck umfasst die Steuereinrichtung eine entsprechende Speichereinrichtung, welche beispielsweise als überschreibbarer Speicher, beispielsweise als RAM, Flash-Speicher oder als EEPROM ausgebildet sein kann. Der Betriebszustand der ersten Steuereinrichtung gibt insbesondere an, ob diese aktuell in der Rolle einer Primärsteuerung oder der einer Reservesteuerung betrieben wird.

Zusätzlich zu der lokalen Speicherung der Fehlerinformationen in der ersten Steuereinrichtung sieht das Verfahren vor, dass die Fehlerinformationen von der ersten zu der zweiten Steuereinrichtung übertragen werden und in der zweiten Steuereinrichtung gespeichert werden. Die Speicherung der Fehlerinformationen in der zweiten Steuereinrichtung erfolgt dabei insbesondere dauerhaft, d.h. über eine zur Verarbeitung der Fehlerinformation erforderliche Dauer hinaus. Als dauerhafte Speicherung ist somit beispielsweise eine Speicherung in einem nichtflüchtigen Speicher oder auch eine Speicherung in einem flüchtigen Speicher für die Dauer des Betriebs der Steuereinrichtung anzusehen.

Das Verfahren kann vorteilhaft auch mit vertauschten Rollen der ersten und zweiten Steuereinrichtung ausgeführt werden, so dass die beiden Steuereinrichtungen eine gleichartige Funktionalität aufweisen.

In einer besonders bevorzugten Ausführungsform des Verfahrens ist vorgesehen, die Fehlerinformationen in der ersten und in der zweiten Steuereinrichtung in wenigstens einer Fehlerliste zu speichern, wobei in der Fehlerliste insbesondere die erkannten Fehler, sortiert nach Fehlerzeitpunkt, oder die erkannten Fehlerarten, sortiert nach Häufigkeit ihres Auftretens, gespeichert werden. Das Speichern eines Fehlers in der Fehlerliste umfasst das Speichern eines Listeneintrags, welcher Fehlerinformationen zu diesem Fehler umfasst.

In der nach Fehlerzeitpunkten sortierten Fehlerliste werden vorteilhaft alle von der jeweiligen Steuereinrichtung erkannten Fehler gespeichert. Um den Speicherbedarf zu reduzieren, kann die Fehlerliste auf eine vorgegebene Anzahl von Einträgen, beispielsweise fünf oder zehn, begrenzt werden, so dass in der Fehlerliste nur die jeweils letzten erkannten Fehler gespeichert werden. Da dies jedoch bei häufigem Auftreten eines bestimmten Fehlers dazu führen kann, dass ein anderer erkannter Fehler bereits nach kurzer Zeit aus der Fehlerliste gelöscht wird, kann vorteilhaft vorgesehen sein, eine Fehlerliste zu speichern, in welcher die erkannten Fehlerarten aufgelistet sind. Auch diese Fehlerliste kann vorteilhaft auf eine vorgegebene Anzahl von Einträgen begrenzt werden. Besonders bevorzugt werden die erkannten Fehler einer Fehlerart bzw. eines Fehlercodes gezählt und die Häufigkeit, mit der ein Fehler der jeweiligen Fehlerart aufgetreten ist, in dem jeweiligen Listeneintrag dieser Fehlerart gespeichert.

Besonders vorteilhaft werden in jeder Steuereinrichtung für jede Steuereinrichtung jeweils beide oben beschriebenen Arten von Fehlerlisten gespeichert.

Vorteilhaft werden die in der ersten und in der zweiten Steuereinrichtung gespeicherten korrespondierenden Fehlerlisten in vorgegebenen Zeitabständen abgeglichen. Korrespondierende Fehlerlisten sind dabei Fehlerlisten der gleichen Art, in denen jeweils Fehlerinformationen zu Fehlern gespeichert sind, die von der gleichen Steuereinrichtung erkannt wurden. Alternativ oder zusätzlich können die in der ersten und in der zweiten Steuereinrichtung gespeicherten Fehlerlisten vorteilhaft bei jedem erkannten Fehler aktualisiert werden, wobei zu diesem Zweck in Abhängigkeit der Fehlerinformationen zu dem erkannten Fehler sowohl die in der lokalen Steuereinrichtung gespeicherte Fehlerliste aktualisiert wird als auch die Fehlerinformation zu der entfernt angeordneten Steuereinrichtung übertragen wird und dort die korrespondierende Fehlerliste aktualisiert wird.

Zu Diagnosezwecken umfasst jede Steuereinrichtung vorzugsweise ein Display zur Anzeige der Fehlerinformationen bzw. der Fehlerlisten. Dementsprechend sieht das Verfahren insbesondere vorteilhaft vor, die Fehlerinformationen zu einem von einer der Steuereinrichtungen erkannten Fehler bzw. eine auf Basis dieser Fehlerinformationen erstellten Fehlerliste auf einem Display der jeweils anderen Steuereinrichtung anzuzeigen.

Dies ist besonders vorteilhaft, um beispielsweise zu Wartungszwecken bei weit entfernt zueinander angeordneten Steuereinrichtungen lokal am Installationsort einer der beiden Steuereinrichtungen die Fehlerinformationen sowohl der lokalen als auch der entfernten Steuereinrichtung visuell anzeigen zu können. Ferner kann vorteilhaft bei Ausfall einer der beiden Steuereinrichtungen die Fehlerhistorie der ausgefallenen Steuereinrichtung lokal vor Ort auf der anderen Steuereinrichtung angezeigt werden. Dies ist auch dann vorteilhaft, wenn die Steuereinrichtungen beispielsweise direkt nebeneinander angeordnet sind.

Das oben genannte technische Problem wird auch durch die Merkmale des Anspruchs 9 gelöst.

Danach ist eine Steuer- und Datenübertragungsanlage zur redundanten Prozesssteuerung vorgesehen, mit wenigstens einer ersten Steuereinrichtung und einer zur ersten redundanten und entfernt zur ersten angeordneten, zweiten Steuereinrichtung, welche über ein Kommunikationsnetzwerk mit wenigstens einer als Ein- und/oder Ausgabegerät ausgebildeten Prozesseinrichtung verbunden sind, wobei zwischen der ersten und zweiten Steuereinrichtung eine Kommunikationsverbindung besteht, jede der Steuereinrichtungen zum Erkennen von Fehlern und zum Speichern von Fehlerinformationen zu erkannten Fehlern ausgebildet ist. Jede der Steuereinrichtungen ist ferner dazu ausgebildet, Fehlerinformationen zu von dieser Steuereinrichtung erkannten Fehlern über die Kommunikationsverbindung zu der jeweils anderen Steuereinrichtung zu übertragen, und von der jeweils anderen Steuereinrichtung empfangene Fehlerinformationen dauerhaft zu speichern.

In vorteilhaften Ausführungsformen ist die Steuer- und Datenübertragungsanlage jeweils dazu ausgebildet, die oben beschriebenen vorteilhaften Ausführungsformen des Verfahrens auszuführen.

Ferner liegt eine Steuereinrichtung zum Einsatz in einer oben beschriebenen Steuer- und Datenübertragungsanlage im Rahmen der Erfindung, welche dazu ausgebildet ist, von einer anderen, gleichartigen Steuereinrichtung Fehlerinformationen zu von der anderen Steuereinrichtung erkannten Fehlern über eine Kommunikationsverbindung zu empfangen und dauerhaft zu speichern.

Die oben beschriebenen Ausführungsformen der Erfindung können mit Vorteil in beliebiger Weise kombiniert werden.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile. Es zeigen:
- Fig. 1: eine schematische Darstellung einer bevorzugten Ausführungsform eines Steuer- und Datenübertragungsanlage, und
- Fig. 2: eine schematische Darstellung einer Display-Anzeige einer Steuereinrichtung zur Anzeige von Fehlerlisten.

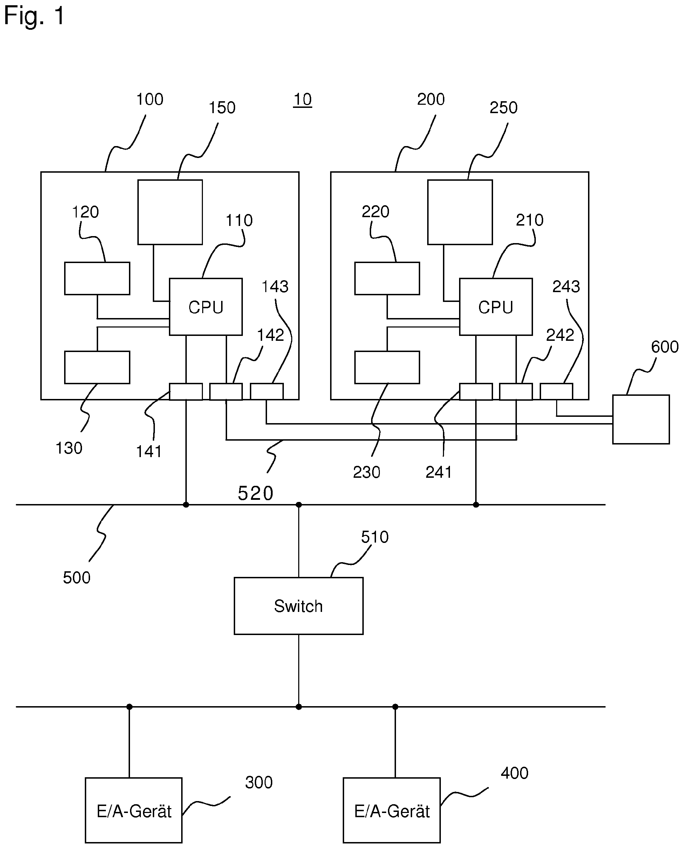

In Fig. 1 ist eine beispielhafte Steuer- und Datenübertragungsanlage 10 dargestellt, die beispielsweise in der Automatisierungstechnik oder der Tunnelüberwachung zum Einsatz kommt. Im dargestellten Ausführungsbeispiel umfasst die Steuer- und Datenübertragungsanlage 10 zwei redundante Steuereinrichtungen 100 und 200, die über ein Kommunikationsnetzwerk 500 mit Prozesseinrichtungen 300 und 400 verbunden sind. Das Kommunikationsnetzwerk 500 kann weitere Komponenten wie beispielsweise den dargestellten Switch 510 umfassen, und ist im dargestellten Ausführungsbeispiel als PROFINET-Kommunikationsnetz ausgebildet. PROFINET (Process Field Network) ist ein im Bereich der Automatisierung eingesetzter offener Industrial Ethernet-Standard. Es kann aber auch jedes andere geeignete Kommunikationsnetzwerk, wie zum Beispiel ein Feldbus, eingesetzt werden.

Die Steuereinrichtungen 100 und 200 umfassen jeweils einen Speicher 120 bzw. 220, in welchem jeweils ein Steuerprogramm gespeichert ist, welches jeweils mittels eines Prozessors 110 bzw. 210 ausführbar ist. Die Steuereinrichtungen 100 und 200 sind jeweils über eine Ethernet-Schnittstelle 141 bzw. 241 an das PROFINET-Netzwerk 500 angeschlossen. Ferner sind die Steuereinrichtungen 100 und 200 mittels zusätzlicher Schnittstellen 142 und 242 über eine Direktverbindung 520 miteinander verbunden. Die Direktverbindung 520 kann beispielsweise als Ethernet-basierte Lichtwellenleiter (LWL)-Verbindung und die Schnittstellen 142 und 242 dementsprechend als LWL-Schnittstellen ausgebildet sein. Es liegt aber auch jede andere geeignete Art einer Direktverbindung im Rahmen der Erfindung. Über die Verbindung 520 erfolgt eine Synchronisation der von den Steuereinrichtungen 100 und 200 jeweils ausgeführten Steuerprogramme. Ferner können über die Verbindung 520 Statusdaten ausgetauscht werden, so dass die Steuereinrichtungen jeweils über den Betriebszustand der jeweils anderen Steuereinrichtung informiert sind und einen Ausfall der jeweils anderen Steuereinrichtung erkennen können.

Die Steuereinrichtungen 100 und 200 umfassen ferner jeweils einen Fehlerspeicher 130 bzw. 230 zur Speicherung von Fehlerinformationen in Form von Fehlerlisten. Die Speicher 120 und 220, sowie die Fehlerspeicher 130 und 230, können als überschreibbarer Speicher, beispielsweise als RAM, Flash-Speicher oder als EEPROM ausgebildet sein.

Da die Steuereinrichtungen 100 und 200 im dargestellten Ausführungsbeispiel als speicherprogrammierbare Steuerungen (SPS) ausgeführt sind, werden diese im Folgenden auch als Steuerung oder als Redundanzsteuerung bezeichnet.

Die beiden Redundanzsteuerungen 100 und 200 sind so konfiguriert, dass eine vom Typ FIRST und eine vom Typ SECOND ist, die Steuerungen also als erste (FIRST) und als zweite (SECOND) Steuerung identifizierbar sind. Diese Einstellung bleibt über die Laufzeit konstant, während die Rollen der Steuerungen als Primärsteuerung und als Reservesteuerung wechseln können. Es kann eine Vorzugsauswahl vorgesehen sein, dergestalt, dass im Normalbetrieb die Steuerung vom Typ FIRST die Rolle der Primärsteuerung übernimmt und die Steuerung vom Typ SECOND die Rolle der Reservesteuerung.

Besteht eine Synchronisationsverbindung, kann zwischen den Steuerungen 100 und 200 die jeweilige Rolle direkt ausgehandelt werden. Die Redundanzsteuerungen sind als separate, räumlich voneinander getrennte Einrichtungen ausgebildet, wobei diese beispielsweise direkt nebeneinander angeordnet sein können. Die Entfernung zwischen den Redundanzsteuerungen kann aber je nach Einsatzzweck auch sehr groß sein, beispielsweise kann diese mehr als 10, mehr als 100 oder mehr als 1000 Meter, oder sogar bis zu 80 km betragen. Die Kommunikation zu den unterlagerten E/A-Stationen 300 und 400 erfolgt über das Ethernet-basierte PROFINET Protokoll. Dabei hat jede der beiden Steuerungen 100 und 200 im normalen Betrieb eine Kommunikationsverbindung zu jeder der projektierten E/A-Stationen 300 und 400 aufgebaut.

Zur Anzeige von Fehlerinformationen umfassen die Steuereinrichtungen 100 und 200 jeweils ein Display 150 bzw. 250, welches zur Anzeige wenigstens einer Fehlerliste ausgebildet ist. Die maximale Anzahl gleichzeitig anzeigbarer Listeneinträge einer Fehlerliste ist abhängig von der Größe des Displays 150 bzw. 250. Um eine übersichtliche Darstellung zu ermöglichen, ist das Display 150 bzw. 250 jeweils vorzugsweise derart ausgebildet, dass wenigstens zwei Listeneinträge, vorzugsweise wenigstens fünf oder wenigstens zehn Listeneinträge gleichzeitig anzeigbar sind, ohne zwischen mehreren Anzeigeseiten blättern zu müssen. Im dargestellten Ausführungsbeispiel sind die Displays 150 und 250 als hochauflösende Displays ausgebildet. Für Benutzereingaben kann bei den Displays 150 und 250 ferner vorteilhaft eine Touchscreen-Funktion vorgesehen sein.

Zur Fehlerdiagnose können in einer der Steuereinrichtungen 100 bzw. 200 aufgelaufene Fehlermeldungen sowohl in Form von Fehlercodes als auch im Klartext auf dem jeweiligen Display 150 bzw. 250 angezeigt werden. Vorteilhaft werden die aufgelaufenen Fehlerinformationen in der Historie gespeichert und in Listen angezeigt, die zum Einen beispielsweise die letzten 10 Fehler und zum Anderen beispielsweise die häufigsten 10 Fehler anzeigen, um somit, direkt am Gerät, einen Überblick über die Anlagenfunktion zu geben.

Würden jedoch nur jeweils die lokal aufgelaufenen Fehlerinformationen angezeigt, so wäre keine gesamtheitliche Diagnose des Redundanzsystems möglich. Dies wäre bei einem hochverfügbaren System wie einer Steuer- und Datenübertragungsanlage zur redundanten Prozesssteuerung nicht vorteilhaft. Insbesondere nach einer Umschaltung der Rolle von Primärsteuerung auf Reservesteuerung, würden die aufgelaufenen Fehlerinformationen nur auf der Steuerung vorliegen, die nicht mehr den Prozess steuert. Es würden somit zwei verschiedene Fehlerlisten generiert, die nicht miteinander korrelieren müssen.

Um eine gesamtheitliche Redundanz-bezogene Diagnose des Redundanzsystems 10 zu ermöglichen, sind die Steuereinrichtungen 100 und 200 daher dazu ausgebildet, anstehende Fehlerinformationen zur jeweiligen Partnersteuerung zu übertragen, damit diese Fehlerinformationen auf beiden Seiten, auf Seiten der jeweils lokalen Steuereinrichtung und auf Seiten der zu dieser entfernten Steuereinrichtung zur Verfügung stehen und in geeigneter Weise dargestellt werden können.

Die Fehlerlisten werden aufbereitet und mit zusätzlichen Informationen versehen, um den Überblick über das Gesamtsystem zu ermöglichen. Bei der Liste der letzten Fehlereinträge werden so die Informationen gesichert, welcher Fehlercode vorliegt, ein Zeitstempel, wann der Fehler aufgetreten ist, und welche Rolle die Steuerung zum Zeitpunkt des Auftretens eingenommen hat, Primärsteuerung oder Reservesteuerung. In der Liste der häufigsten Fehler wird der Fehlercode und die Anzahl der Fehlereintritte gespeichert und nach Häufigkeit sortiert.

Vorteilhaft wird der Abgleich der Fehlerinformationen durch eine Erweiterung eines Protokolls zur automatischen Synchronisation automatisiert. Es wird zwischen den beiden Steuerungen der aktuell anstehende Fehler übertragen. Zusätzlich werden die beiden Fehlerlisten von beiden Steuerungen zyklisch zwischen den Steuerungen 100 und 200 abgeglichen und stehen so zur Anzeige auf beiden Seiten der Synchronisationsverbindung zur Verfügung. Die Anzeige der Listen kann sowohl als Fehlercode als auch als Klartextmeldung erfolgen. Zu diesem Zweck verfügt jede der Steuerungen 100 und 200 über eine entsprechende Zuordnungsmöglichkeit, insbesondere in Form einer gespeicherten Zuordnungstabelle, in welcher jedem zulässigen Fehlercode eine Fehlerkurzbeschreibung zugeordnet ist.

Zum Abgleich der Fehlerinformation wird vorteilhaft neben den Zusatzinformationen wie Zeitpunkt, Rolle und Häufigkeit nur der Fehlercode und nicht der Klartext übertragen, um die Datenmenge der Listen für den Abgleich zwischen den Steuerungen 100 und 200 zu minimieren.

Mit Hilfe dieses Verfahrens liegen nun auf beiden Steuerungen 100 und 200 immer die aktuellen Fehlerlisten der lokalen und der entfernten Steuerung vor, sodass eine vollständige Historie auf beiden Steuerungen zur Verfügung steht und mit den Informationen Fehlerart bzw. Fehlercode, Zeitpunkt und Rolle der Steuerung bei Fehlereintritt und der Information zur Fehlerhäufigkeit auf beiden Steuerungen 100 und 200 das Verhalten des gesamten Redundanzsystems 10 diagnostiziert werden kann.

Vorzugsweise kann vorgesehen sein, die Listen zu löschen, um einen definierten Anfangspunkt der Informationsaufzeichnung zu setzen.

Ferner ist vorteilhaft vorgesehen, mit einem Diagnosetool die Fehlerlisten der primären Steuerung auszulesen und somit die vollständigen Diagnoseinformationen des Gesamtsystems sowohl auf einem Engineering Rechner 600, als auch eingebettet in einer Visualisierung zur Verfügung zu haben. Zu diesem Zweck können die Steuereinrichtungen 100 und 200, jeweils über Schnittstellen 143 bzw. 243, mit dem Engineering Rechner 600 verbunden sein.

Eine Variante besteht darin, dass die Listen nur abgeglichen werden, wenn ein neuer Fehler aufgetreten ist, und sich somit der Inhalt der Listen verändert hat. Dadurch kann die für diesen Abgleich benötigte Bandbreite in der Kommunikation zwischen den beiden Redundanzsteuerungen 100 und 200 minimiert werden.

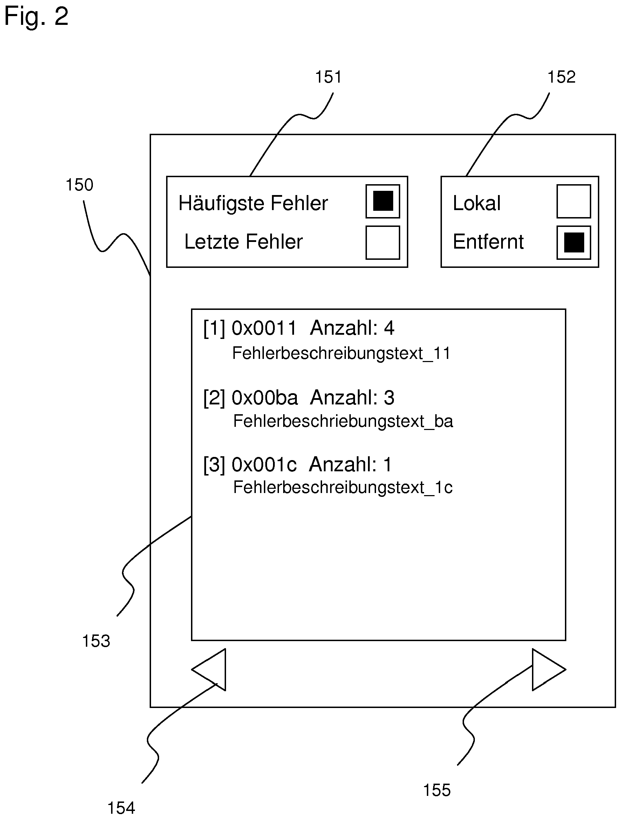

In Fig. 2 ist beispielhaft die Anzeige auf dem Display 150 der Steuereinrichtung 100 dargestellt.

Wie oben beschrieben, führt jede der Steuerungen 100 und 200 auch mindestens eine Fehlerliste der jeweils anderen Steuerung. Im dargestellten Beispiel führt die Steuereinrichtung 100 zwei Arten Fehlerlisten, eine Liste der letzten Fehler und eine Liste der häufigsten Fehler, wobei die Steuereinrichtung 100 für jede Fehlerlistenart eine eigene Fehlerliste und eine Fehlerliste für die entfernte Steuerung 200 führt.

Auf dem Display 150 kann wahlweise eine der eigenen Fehlerlisten oder eine der Fehlerlisten der anderen Steuerung angezeigt werden. Zu diesem Zweck ist eine Schaltfläche 151 zur Auswahl der Fehlerlistenart "Letzte Fehler" oder "Häufigste Fehler", sowie eine Schaltfläche 152 zur Auswahl der jeweiligen Fehlerliste der lokalen Steuerung, d.h. im dargestellten Beispiel der Steuerung 100, oder der entfernten Steuerung, d.h. im dargstellten Beispiel der Steuerung 200. Die Listeneinträge der Fehlerlistenart "Letzte Fehler" werden vorzugsweise chronologisch nach Zeitpunkt des Auftretens des jeweiligen Fehlers sortiert, beginnend mit dem zuletzt aufgetretenen Fehler angezeigt, die Listeneinträge der Fehlerlistenart "Häufigste Fehler" werden vorzugsweise nach Häufigkeit des Auftretens der jeweiligen Fehlerart sortiert, beginnend mit dem häufigsten Fehler, angezeigt.

Im dargestellten Beispiel ist die Fehlerliste "Häufigste Fehler" der entfernten Steuerung ausgewählt. Diese Fehlerliste 153 wird daher auf dem Display 150 angezeigt. Bei dem in Fig. 2 dargestellten Beispiel können bis zu fünf Listeneinträge gleichzeitig angezeigt werden. Umfasst die jeweilige Liste eine größere Anzahl an Einträgen, so kann im dargestellten Beispiel zwischen mehreren Seiten geblättert werden, wobei die Steuerung mit Hilfe der Schaltflächen 154 und 155 erfolgt.

Es wäre auch denkbar, bei einem ausreichend großen Display mehrere oder alle Fehlerlisten gleichzeitig anzuzeigen.

Bei weit voneinander entfernten Steuerungen hat der Bediener somit die Möglichkeit, sich auf der jeweils lokalen Steuerung, dort wo er sich befindet, nicht nur die Fehlerliste oder die Fehlerlisten dieser Steuerung anzeigen zu lassen, sondern auch die Fehler der weit entfernten Steuerung. Ferner hat der Bediener die Möglichkeit, bei Ausfall einer der Steuerungen auf der jeweils anderen Steuerung die Fehlerliste oder die Fehlerlisten der ausgefallenen Steuerung anzeigen zu lassen.

## Patentansprüche

1. Verfahren zur Fehlerüberwachung in einer zur redundanten Prozesssteuerung ausgebildeten Steuer- und Datenübertragungsanlage (10) mit wenigstens einer ersten Steuereinrichtung (100) und einer zur ersten redundanten und entfernt zur ersten angeordneten, zweiten Steuereinrichtung (200), welche über ein Kommunikationsnetzwerk (500) mit wenigstens einer als Ein- und/oder Ausgabegerät ausgebildeten Prozesseinrichtung (300, 400) verbunden sind, wobei zwischen der ersten und zweiten Steuereinrichtung (100, 200) eine Kommunikationsverbindung besteht, über welche die erste und zweite Steuereinrichtung Daten zur Synchronisierung der auf den Steuereinrichtungen jeweils ablaufenden Steuerprogramme zur Prozesssteuerung austauschen, mit den Schritten:
- Erkennen eines Fehlers durch die erste Steuereinrichtung (100),
- Speichern von Fehlerinformationen zu dem erkannten Fehler in der ersten Steuereinrichtung (100),
- Übertragen der Fehlerinformationen von der ersten zu der zweiten Steuereinrichtung,
- Speichern der von der ersten Steuereinrichtung (100) empfangenen Fehlerinformation in der zweiten Steuereinrichtung (200).

2. Verfahren nach Anspruch 1, wobei die Fehlerinformationen Informationen zur Fehlerart, insbesondere in Form eines Fehlercodes, Informationen zum Fehlerzeitpunkt und/oder Informationen zum Betriebszustand der ersten Steuereinrichtung (100) umfassen.

3. Verfahren nach Anspruch 2, wobei in der ersten und in der zweiten Steuereinrichtung die Fehlerinformationen in wenigstens einer Fehlerliste gespeichert werden, wobei die Fehlerliste insbesondere die erkannten Fehler sortiert nach Fehlerzeitpunkt oder die erkannten Fehlerarten sortiert nach Häufigkeit ihres Auftretens umfasst.

4. Verfahren nach Anspruch 3, wobei die in der ersten und in der zweiten Steuereinrichtung gespeicherten Fehlerlisten in vorgegebenen Zeitabständen abgeglichen werden.

5. Verfahren nach Anspruch 3, wobei die in der ersten und in der zweiten Steuereinrichtung gespeicherten Fehlerlisten bei jedem erkannten Fehler aktualisiert werden.

6. Verfahren nach einem der vorstehenden Ansprüche, wobei die Fehlerinformationen auf einem Display der zweiten Steuereinrichtung angezeigt wird.

7. Verfahren nach einem der Ansprüche 3 bis 5, wobei die wenigstens eine Fehlerliste auf einem Display der zweiten Steuereinrichtung angezeigt wird.

8. Steuereinrichtung, ausgebildet zum Einsatz in einer Steuer- und Datenübertragungsanlage,
- ausgebildet zum Erkennen von Fehlern und zum Speichern von Fehlerinformationen zu erkannten Fehlern,
- dazu ausgebildet, Fehlerinformationen zu von dieser Steuereinrichtung erkannten Fehlern über eine zwischen dieser Steuereinrichtung und einer anderen, gleichartigen Steuereinrichtung bestehenden Kommunikationsverbindung zu der anderen Steuereinrichtung zu übertragen,
- dazu ausgebildet, von der anderen Steuereinrichtung Fehlerinformationen zu von der anderen Steuereinrichtung erkannten Fehlern über die Kommunikationsverbindung zu empfangen und dauerhaft zu speichern, und
- dazu ausgebildet, über die Kommunikationsverbindung mit der anderen Steuereinrichtung Daten zur Synchronisierung der auf den Steuereinrichtungen jeweils ablaufenden Steuerprogramme zur Prozesssteuerung auszutauschen.

9. Steuer- und Datenübertragungsanlage (10) zur redundanten Prozesssteuerung, mit wenigstens einer ersten Steuereinrichtung (100) gemäß Anspruch 8 und einer zur ersten redundanten und entfernt zur ersten angeordneten, zweiten Steuereinrichtung (200) gemäß Anspruch 8, welche über ein Kommunikationsnetzwerk (500) mit wenigstens einer als Ein- und/oder Ausgabegerät ausgebildeten Prozesseinrichtung (300, 400) verbunden sind, wobei
- zwischen der ersten und zweiten Steuereinrichtung (100, 200) eine Kommunikationsverbindung besteht, über welche die erste und zweite Steuereinrichtung Daten zur Synchronisierung der auf den Steuereinrichtungen jeweils ablaufenden Steuerprogramme zur Prozesssteuerung austauschen.

## Claims

1. A method for error monitoring in a control and data transmission system (10) designed for redundant process control, which comprises at least one first control device (100) and one second control device (200) redundant to the first one and located remotely from the first one, which are connected to at least one process device (300, 400) in the form of an input and/or output device via a communication network (500); wherein
the first and second control devices (100, 200) are in communication through a communication link via which the first and second control devices exchange data for synchronizing the respective control programs for process control that are executed on the control devices, comprising the steps of:
- detecting an error by the first control device (100);
- storing error information about the detected error in the first control device (100);
- transmitting the error information from the first control device to the second control device;
- storing the error information received from the first control device (100) in the second control device (200).

2. The method according to claim 1, wherein the error information comprises information about the type of error, in particular in the form of an error code, information about the time of the error and/or information about the operating state of the first control device (100).

3. The method according to claim 2, wherein the error information is stored in at least one error list in the first and second control devices, the error list comprising in particular the detected errors sorted by the time of the error or the detected types of error sorted by the frequency of their occurrence.

4. The method according to claim 3, wherein the error lists stored in the first and second control devices are compared at predetermined time intervals.

5. The method according to claim 3, wherein the error lists stored in the first and second control devices are updated with each detected error.

6. The method according to any one of the preceding claims, wherein the error information is shown on a display of the second control device.

7. The method according to any one of claims 3 to 5, wherein the at least one error list is shown on a display of the second control device.

8. A control device, designed for use in a control and data transmission system,
- adapted to detect errors and to store error information about detected errors;
- adapted to transmit error information about errors detected by this control device to a further, similar control device via a communication link existing between this control device and the further, similar control device;
- adapted to receive and permanently store error information from the further control device about errors detected by the further control device via the communication link; and
- adapted to exchange data with the further control device for synchronization of the respective control programs for process control that are executed on the control devices, via the communication link.

9. A control and data transmission system (10) for redundant process control, comprising at least one first control device (100) according to claim 8 and one second control device (200) according to claim 8 which is redundant to the first one and located remotely from the first one, which are connected to at least one process device (300, 400) in the form of an input and/or output device via a communication network (500); wherein
- the first and second control devices (100, 200) are in communication through a communication link via which the first and second control devices exchange data for synchronizing the respective control programs for process control that are executed on the control devices.

## Revendications

1. Procédé de surveillance d'erreurs dans une installation de commande et de transmission de données (10) constituée pour la commande de processus redondante avec au moins un premier équipement de commande (100) et un deuxième équipement de commande (200), redondant par rapport au premier et disposé à distance du premier, lesquels sont, par le biais d'un réseau de communication (500), raccordés à au moins un équipement de processus (300, 400) constitué en tant qu'appareil d'entrée et/ou de sortie, où une liaison de communication est présente entre le premier et le deuxième équipement de commande (100, 200), par le biais de laquelle le premier et le deuxième équipement de commande échangent des données destinées à la synchronisation des programmes de commande exécutés respectivement sur les équipements de commande pour la commande de processus, comportant les étapes consistant à :
- détecter une erreur par le premier équipement de commande (100),
- enregistrer des informations d'erreur portant sur l'erreur détectée dans le premier équipement de commande (100),
- transmettre des informations d'erreur à partir du premier vers le deuxième équipement de commande,
- enregistrer, dans le deuxième équipement de commande (200), de l'information d'erreur en provenance du premier équipement de commande (100).

2. Procédé selon la revendication 1, où les informations d'erreur comprennent des informations sur le type d'erreur, en particulier sous la forme d'un code d'erreur, des informations sur le moment de l'erreur et/ou des informations sur l'état de fonctionnement du premier équipement de commande (100).

3. Procédé selon la revendication 2, où les informations d'erreur sont, dans le premier et dans le deuxième équipement de commande, enregistrées dans au moins une liste d'erreurs, où la liste d'erreurs trie en particulier les erreurs détectées selon l'instant de l'erreur ou trie les types d'erreur détectées selon la fréquence de leur survenue.

4. Procédé selon la revendication 3, où les listes d'erreurs enregistrées dans le premier et dans le deuxième équipement de commande sont comparées à des intervalles de temps prédéfinis.

5. Procédé selon la revendication 3, où les listes d'erreurs enregistrées dans le premier et dans le deuxième équipement de commande sont actualisées lors de chaque erreur détectée.

6. Procédé selon l'une des revendications précédentes, où les informations d'erreur sont affichées sur un écran du deuxième équipement de commande.

7. Procédé selon l'une des revendications 3 à 5, où l'au moins une liste d'erreurs est affichée sur un écran du deuxième équipement de commande.

8. Equipement de commande, constitué pour l'utilisation dans une installation de commande et de transmission de données,
- constitué pour la détection d'erreurs et pour l'enregistrement d'informations d'erreurs portant sur des erreurs détectées,
- constitué pour transmettre des informations d'erreur portant sur des erreurs détectées par cet équipement de commande vers l'autre équipement de commande par le biais d'une liaison de communication présente entre cet équipement de commande et un autre équipement de commande de même type,
- constitué pour recevoir, par le biais de la liaison de communication, en provenance de l'autre équipement de commande, des informations d'erreur portant sur des erreurs détectées par l'autre équipement de commande et pour les enregistrer durablement, et
- constitué pour, par le biais de la liaison de communication, échanger avec l'autre équipement de commande des données destinées à la synchronisation des programmes de commande destinés à la commande de processus exécutés respectivement sur les équipements de commande.

9. Installation de commande et de transmission de données (10) pour la commande de processus redondante, avec au moins un premier équipement de commande (100) selon la revendication 8 et un deuxième équipement de commande (200) selon la revendication 8, redondant par rapport au premier et disposé à distance du premier, lesquels sont, par le biais d'un réseau de communication (500), raccordés à au moins un équipement de processus (300, 400) constitué en tant qu'appareil d'entrée et/ou de sortie,
- une liaison de communication étant présente entre le premier et le deuxième équipement de commande (100, 200), par le biais de laquelle le premier et le deuxième équipement de commande échangent des données destinées à la synchronisation des programmes de commande exécutés respectivement sur les équipements de commande pour la commande de processus.
